(19)

Europäisches
Patentamt
European
Patent Office
Office européen
des brevets

(11) **EP 2 643 118 B1**

(12) **EUROPEAN PATENT SPECIFICATION**

(45) Date of publication and mention
of the grant of the patent:
**17.05.2017 Bulletin 2017/20**

(21) Application number: **11782120.7**

(22) Date of filing: **09.11.2011**

(51) Int Cl.:
**B23D 61/18** ^(2006.01)

(86) International application number:
**PCT/EP2011/069753**

(87) International publication number:
**WO 2012/069314 (31.05.2012 Gazette 2012/22)**

(54) **A STRUCTURED SAWING WIRE**

STRUKTURIERTER SÄGEDRAHT

FIL DE SCIAGE STRUCTURÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2010 EP 10192112**

(43) Date of publication of application:
**02.10.2013 Bulletin 2013/40**

(73) Proprietor: **Bekaert Binjiang Steel Cord Co., Ltd.
Jiangyin City, Jiangsu Province (CN)**

(72) Inventor: **ROMMEL, Hendrik
B-8200 Sint-Michiels (BE)**

(74) Representative: **Seynhaeve, Geert Filiep
NV Bekaert SA
D.I.E.
Bekaertstraat 2
8550 Zwevegem (BE)**

(56) References cited:
**WO-A1-99/28547     WO-A1-2006/067062
JP-A- 1 289 527     JP-A- 4 057 666
JP-A- 5 279 974     JP-A- 2004 276 207
US-A- 2 860 862     US-A- 5 261 974**

**Description**

**Technical Field**

The invention relates to the field of wires designed for cutting hard en brittle materials. More specifically it relates to a sawing wire as per the preamble of claim 1, that is used to cut materials like quartz (for e.g. quartz oscillators or mask blancs), silicon (for e.g. integrated circuit wafers or solar cells), gallium arsenide (for high frequency circuitry), silicon carbide (e.g. for blue led's), rare earth magnetic alloys (e.g. for recording heads).

An example of such a sawing wire is disclosed by JP 2004 276 207A.

**Background Art**

Multi-wire sawing of hard and brittle materials in the electronics industry appears to be first invented by C. Hayward of the British Thomson-Houston Cy. Ltd. and is described in GB 717874 (published 1954) and GB 771622 (published 1957). The technology has been taken further by H.W. Mech of Motorola Inc. as apparent in GB 1397676 (published 1975).

In these patents all features of modern multi-wire saws can be found back:

> 1. guiding of a single wire over driven capstans in multiple loops;
> 2. the capstans are provided with grooves for offsetting the wire between loops: a wire web is thus formed;
> 3. usage of a loose abrasive slurry as a cutting agent that is fed on the wire web while the workpiece is slowly entered into the wire web;
> 4. the wire is reciprocated between two spools or alternatively the wire always travels in the same direction;

Many alternate configurations for the wire arrangement relative to the workpiece have been devised. Examples of such arrangements can be found in CH 692489.

It will be clear from the above that the wire is crucial in the sawing process. The function of the wire is first to drag the abrasive slurry into the cut. The slurry mainly comprises a carrier fluid (originally a mineral oil but nowadays predominantly poly ethylene glycol (PEG) is used) in which abrasive particles float. The abrasive particles are usually siliconcarbide (also known under its old name of 'carborundum'), although other abrasives such as boron carbide, diamond, cubic boron nitride (CBN) could also be used.

The second function of the wire is to push the abrasive particles against the workpiece. So the wire must be able to maintain a certain tension at all times as this tension is converted into the force by which the abrasive particles are pushed into the workpiece. Hence not only the workpiece is cut by the abrasive, but also the surface of the wire is severely damaged as the abrasive particles tend to stick and roll between the workpiece and the wire. Thus the wire is worn in the process and must be replaced before it breaks under the tension applied.

As the wire tends to rotate around its longitudinal axis during cutting, the wires that are used are predominantly of circular cross section. The disadvantage of such a circular shape is that the abrasive particles - initially caught between the wire and the workpiece - tend to be pushed out from between the wire and the workpiece. As a result the amount of abrasive is depleted from the start of the cut onward. If less abrasive is present between wire and workpiece, the cutting is reduced and friction between wire and workpiece starts to occur. While this depletion is not a particular problem in case of cutting lengths of below 400 mm or less (the example of silicon ingots is referred to), it becomes a problem when longer lengths need to be cut. It is therefore a recurring theme in the field of sawing wire to find ways to entrain sufficient abrasive into the cut such that the cutting action is maintained till the exit of the cut.

A first solution to this problem is to stick the abrasive particles to the wire, so that they cannot move out of the cut. In this way the relative velocity between abrasive particles and wire is zero and no wear of the wire occurs. Such wire is known as a 'fixed abrasive sawing wire'.

A second solution is to provide a 'structured' wire surface such that the abrasive particles are better held on that 'structured' wire surface. Examples can be found in:

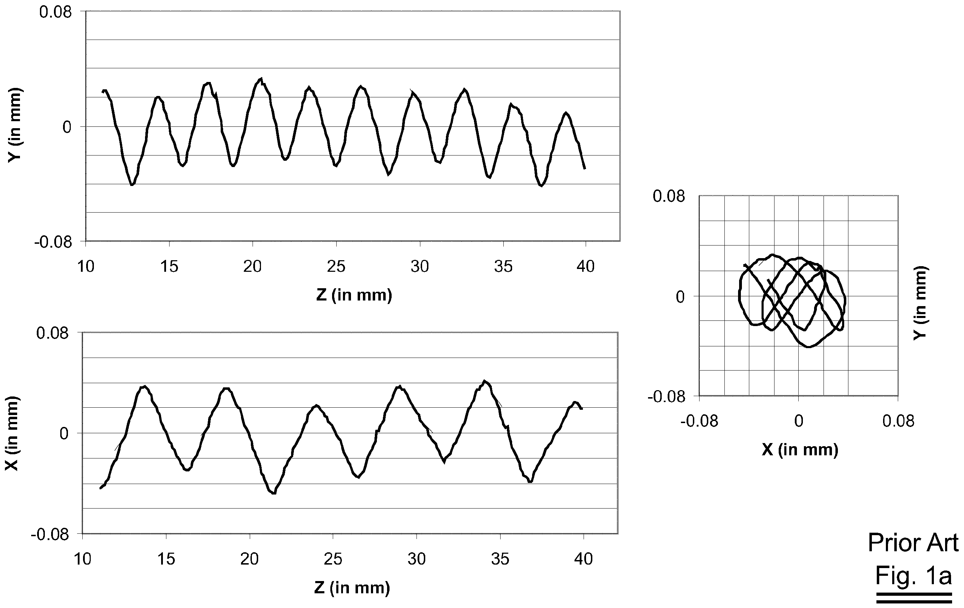

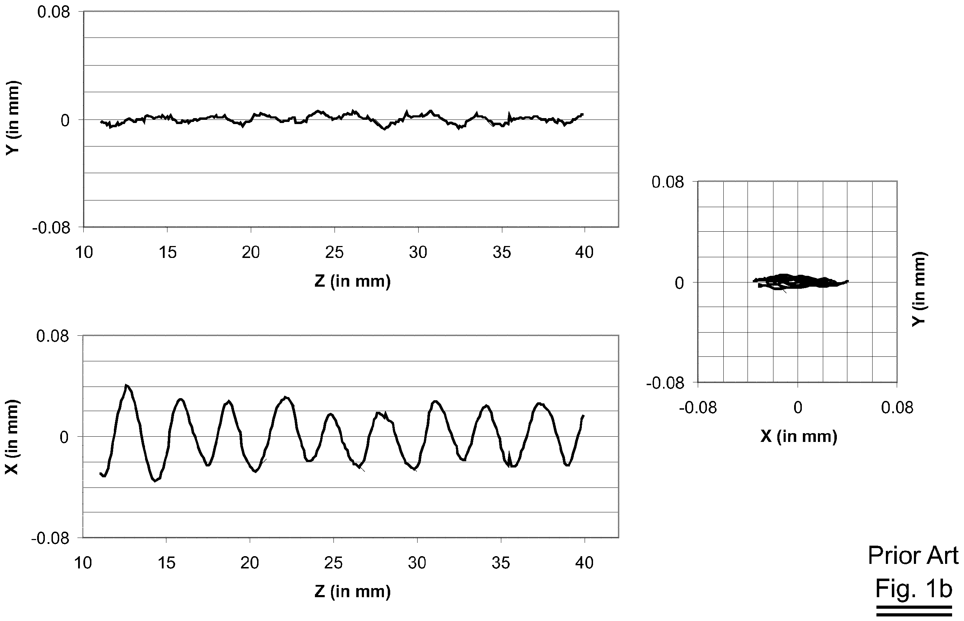

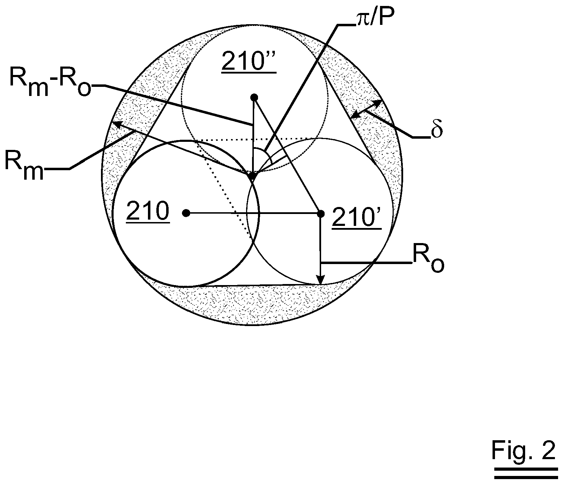

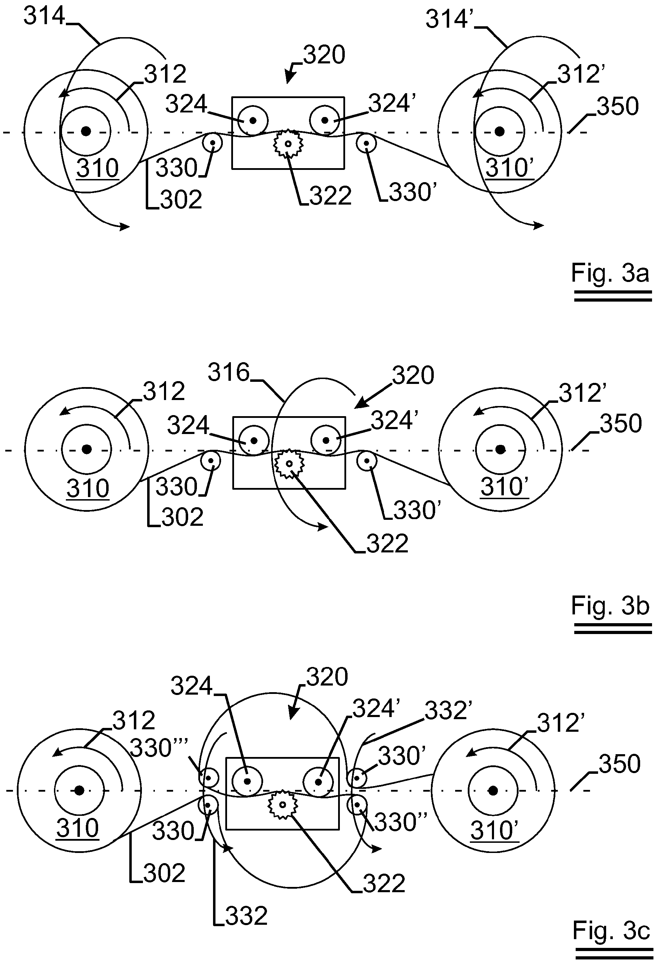

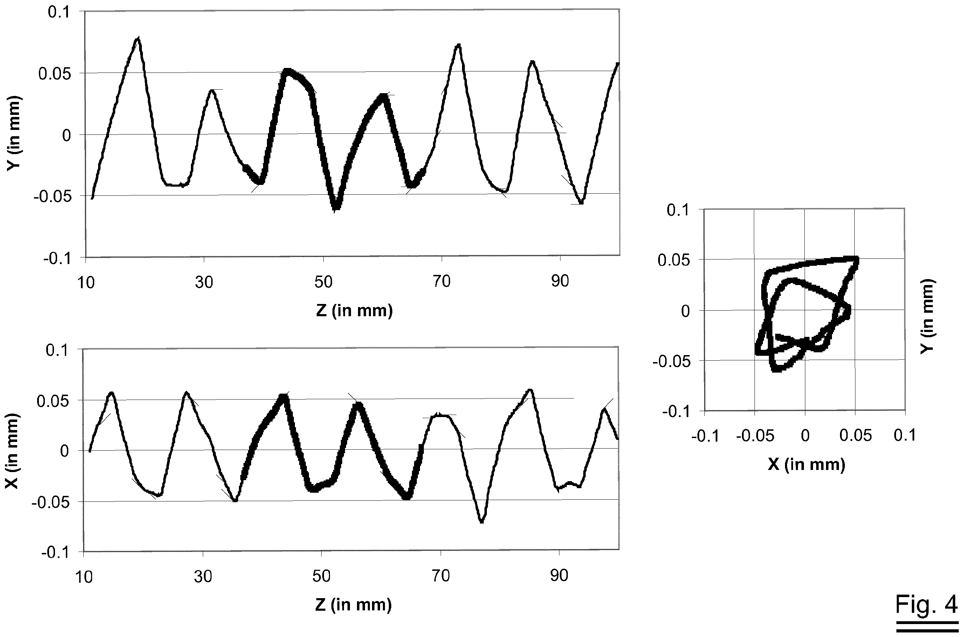

- JP 2007 196312 wherein the wire surface has concave and convex portions for receiving and holding abrasive particles in. In this case the texturing is done through spraying with an electrolyte liquid from a jet nozzle on the wire.
- WO 90/12670 describes different forms of surfaces wherein the cross-section of the wire is variable in area (Figs 2 and 3) along the length of the wire. Also described are a wire with micro cavities (Fig. 1) and a wire with a soft surface in which abrasive particles can indent (Fig. 4).
- JP 2007 044841 describes a substantially round wire with flattened faces that extend spirally around the wire's length.
- KR 2001 002689 describes a round wire whereon cavities are formed by means of indentation.

However, the problem with these solutions is that abrasive action of the particles is so severe that already after five to ten passes through the workpiece the surface of the wire is lapped and nothing of the cavities or the protrusions remain.

A third solution is not to structure the surface but to structure the entire wire on its own. Examples of such solutions can be found in:

- US 2860862 wherein two helical deformations are applied on a flattened wire for sawing stone: initially the wire is twisted around its own axis with a short lay length whereafter it is twisted in a helix shape with a much longer lay length.

This solution appears to be rather cumbersome to make: first the wire has to be flattened followed by an additional helix deformation.

- FR 750081. Although not related to the field of multiwire sawing, the patent describes the use of a helix shaped wire of round or polygonal cross section for sawing stone. The helix has a long lay length.
- JP 4057666 describes a high strength metal wire that is first deformed into a helix shape and later stretched by pulling it through a drawing die.
- JP 2004 276207 describes a deformed single wire or wire strand having a spiral form i.e. a helix shape.

In these solutions the wire is bound to entrain more slurry into the cut as the wire acts as feed screw: taking a fixed point at e.g. the entry of the cut, it appears as if the wire rotates into the cut. However, as the outer part of the helix is in close contact with the semi-cylindrical surface of the cut, it is as if all particles are swept away by the rotating action of the wire and the sawing action is not as good as it should be.

- JP 2004 276207 (additionally) describes a single wire or wire strand that has been led through a pair of cogwheels thereby establishing a zig-zag double crimp in a single plane. In a zig-zag crimp, wires are first bend in a first direction followed by a second bending in a second direction, opposite to the first (reverse bending). When a so deformed wire strand is disentangled, a short length zig-zag crimp is superimposed on a long wave helicoidal shape (resulting from the twining together of the strand).
- WO 2006 067062 describes a monofilament sawing wire provided with a plurality of crimps, each crimp having a pitch length and an amplitude, the crimps being arranged in at least two different planes. A circumscribed enveloping diameter 'D' of the sawing wire is between 1.05 and 1.50 times the diameter 'd' of the wire itself.

While this is a solution that works in practice, another problem appears namely the fact that one of the planes in which the crimps have been made will prevail and the other plane will gradually turn into this prevailing plane. A wire which is substantially deformed in one plane forms and this plane is directed perpendicular to the cutting direction. As a result the cutting speed diminishes. As the wire is restrained in his possibility to rotate, wear of the wire will occur on one side only. Besides that the wire predominantly bears and wears on the protruding tops. The sawing action is therefore limited to those parts and is not as good as it could be.

## Disclosure of Invention

The object of the current invention is to solve the problems of the past. More particularly, it is an object of the invention to provide a structured sawing wire that remains rotational symmetric during use, hence the wire can rotate during use. The inventive structured wire also increases abrasive particle entrainment and action. A second object of the invention is to provide methods to make such a wire.

According a first aspect of the invention a structured sawing wire as per claim 1 is described that is particularly suitable for sawing hard and brittle materials such as group IV elements (such as silicon, germanium), and the compounds thereof (such as silicon carbide), III-V compounds (such as gallium arsenide), quartz and glass, ceramic materials, sapphire, rare earth magnets, natural stone such as marble and the like.

The inventive sawing wire is particularly suited when the span of the cut is more than about 200 mm up to for example one or two meters ('large span' cutting). Small cutting spans of about 300 mm occur in the cropping (removing top and tail of a silicon ingot), the slicing (sometimes called 'wafering') of a silicon ingot. Larger cutting spans occur for example in the cutting of quartz crystals for mask blancs for integrated circuit lithography, or in the squaring of polycrystalline silicon ingots for solar cells. Such squaring is done on either upstanding round monocrystalline silicon ingots for (semi square solar cells) or on a block of polycrystalline silicon that can measure up to $840 \times 840 \times 270$ mm$^3$ which is cut into full square blocks of $125 \times 125 \times 270$ mm$^3$ or $156 \times 156 \times 270$ mm$^3$, or larger even.

The inventive sawing wire is in its most general form a steel wire with a substantially helicoidal shape comprising segments with bends in between, wherein said bends are outwardly oriented i.e. away of the symmetry axis of the helicoidal shape. For the purpose of this application, a helicoidal shape is the space curve that remains invariant under a rotation under a certain angle in combination with an translation. A helix is a special helicoidal shape that remains invariant under any rotation angle with an associated translation.

One can imagine the shape of the centreline of the wire as being formed by connecting discrete points (the 'bends') on a central cylinder by sections (the 'segments') whereby the points are axially displaced from one another by axial increments while the angle between a point and a reference plane increases discretely in angular increments. In its most general form the axial increments between points need not be identical, just like the angular increments between points need not be identical. However, the axial increments and angular increments do not change sign over the wire (i.e. either a left hand or right hand twist direction will be discernable over the full length of the wire). The wire itself is then formed by adding the wire body around the centreline of the wire.

The segments between bends are substantially straight. Thereby is meant that the segments can show some curvature that is in any case much less than the curvature of the wire at the bends. The curvature of the segments is by preference towards the axis of the helicoidal shape.

From the above it will be clear that the wire itself can be circumscribed by a cylinder - coaxial to, but with a larger diameter than the centre cylinder-where at the bends the wire touches the cylinder and in between the bends - i.e. at the segments - the wire does not touch the cylinder. The radius of this circumscribed cylinder will be called '$R_m$', its diameter 'D' in what follows. Hence at those segments a gap will form between the circumscribed cylinder and the wire surface wherein the distance between wire and cylinder increases from zero and decreases to zero when going from one bend to the next. So somewhere a maximum gapsize will occur. The maximum gapsize will be denoted with '$\delta$'.

Turning now to the sawing process, this circumscribed cylinder fits to the semi-cylinder formed in the work piece during sawing. In the gaps formed between wire and work piece, smaller particles, that do not longer have sufficient abrasion action, will go through while bigger, still active particles, will be caught and blocked in the gaps between wire and cylinder surface and give full abrasion action. This 'filtering' is not present in the prior-art structured sawing wires.

It follows that the gapsize must relate to the size of the abrasive particles. The maximum gapsize of the wire is between 0.25 to 2 times the median size of the abrasive particles. More preferred is if the gapsize is between 0.30 times to 1 time the median size of the abrasive particles.

Abrasive particles used for loose abrasive sawing are of the microgrit type. These particles are categorised by means of screening, air classifying or water classifying into different size classes. Different standards exist (FEPA, JIS and ANSI) on what the minimum size, median and maximum size per class is. In general the 'wire saw' area is typically regarded as FEPA 500 (12.8 $\mu$m) to 600 (9.3 $\mu$m) or JIS 800 (14 $\mu$m) to JIS 2000 (6.7 $\mu$m). The numbers between brackets refer to the median particle size. The median particle size is that size for which half of the particles are larger than that size and the other part smaller than that size. For large span cutting, bigger particle sizes are preferred such as FEPA 360 (22.8 $\mu$m) up to FEPA 230 (53.0 $\mu$m). Most preferred is FEPA 320 with a median particle size of 29.2 $\mu$m.

The abrasive particles are made of tungsten carbide (WC), silicon carbide (SiC), aluminium oxide ($Al_2O_3$) or silicon nitride ($Si_3N_4$). By far silicon carbide is most used as it is cheap and readily available. Superabrasive particles such as diamond, cubic boron nitride or mixtures thereof are rather theoretical possibilities as their cost is prohibitive for loose abrasive sawing. As a carrier poly ethylene glycol is mostly used but mineral oils can be used as well.

The wire itself is preferably of round cross section although other cross sections (triangular, square or polygonal) are therefore not a priori excluded. Its diameter can range between 40 $\mu$m up to 350 $\mu$m depending on the application. However, for large span cutting, sizes above 200 $\mu$m are preferred, the typical size being 250 $\mu$m. The radius of the wire will be denoted with '$R_0$', its diameter with 'd' in what follows.

Structured sawing wires according to the invention typically have a tensile strength of above 2500 N/mm$^2$ for diameters smaller than 300 $\mu$m, above 3400 N/mm$^2$ for diameters smaller than 180 $\mu$m, and above 3700 N/mm$^2$ for diameter smaller than 150 $\mu$m. The tensile strength is defined as the breaking load of the sawing wire divided by its metallic cross sectional area.

The length of the segments as taken along the centre of the wire do not have to be equal: one could imply a random segment length to the structured wire. Such a randomness could be helpful to prevent vibrations. Another embodiment is that a repeating pattern of lengths could be imposed between bends. For example 5, 3, 2, 3, 5, 3, 2, 3,...mm. By far the simplest embodiment is of course if the segment length is constant.

For the above described substantially helicoidal shape a pitch length can be defined. The pitch length is that axial length in which the centreline of the wire makes one revolution around the axis of the helicoidal shape. Within one pitch length a number of bends can occur. If the number of bends is exactly two within a pitch length, the wire has a zig-zag shape in a single plane. Although this is a possible usable shape it is not preferred. More preferred is if the number of bends within a pitch length is strictly more than two. With 'more than two' not only integer values (3, 4, 5,...) are meant. Also fractional values of e.g. 2.3 or 5.1 are intended just meaning that over an axial length of 10 pitches 23 or 51 bends can be counted. The precision by which one wants to know the number is just proportional to the number of pitch lengths one considers: if one wants two digit precision, one just will have to count the number of bends in 100 pitch lengths. So the number of bends per pitch length must be taken over a length of pitches i.e. it must be averaged. In what follows we will call this average number of bends per pitch 'P'.

When the average number of bends per pitch assumes integer values such as e.g. three, the wire will show a triangular form when viewed in axial direction. With four bends per pitch this will appear square, with five, pentagonal and so on. However, when the number of bends per pitch rises, the size of the gap that forms between the circumscribed cylinder and the wire segments will diminish, as the polygon - as viewed in axial direction - more and more resembles a circle. It is therefore best if the average number of bends per pitch 'P' is not larger than five, or more preferred four. More preferred is if 'P' is between 2 and 4, most preferred between 2.5 and 3.5.

The relation between gapsize 'δ', circumscribed cylinder radius '$R_m$', average bend per pitch length 'P' and wire radius '$R_0$' can be derived to be (see Figure 2 for clarification):

$$\delta = (R_m - R_0) \underbrace{(1 - \cos \pi / P)}_{Q}$$

The factor 'Q' varies between 1 (for P = 2), 0.691 (for P = 2.5), 0.5 (P = 3) to 0.377 (P=3.5) and quickly diminishes for larger values of 'P'. For the preferred range of P values (2.5 to 3.5) it is therefore best if the difference ($R_m$-$R_0$) is between 0.36 to 5.3 times the median size of the abrasive particles. Or - when expressed in terms of the diameters - that the difference 'D-d' between circumscribed cylinder diameter and wire diameter is between 0.70 to 11 times the median particle size or more preferred between 0.9 to 2 times the median particle size.

The ratio D/d is a convenient measure to use as a production control. It is the ratio of the optical diameter of the wire (corresponding to the diameter of the circumscribed cylinder) to the wire diameter. For the preferred range of the difference 'D-d' between 0.9 to 2 times the median particle size, the optimal D/d ratios then become (Table I):

Table I

| FEPA class | Median size ($\mu$m) | D/d from ... to.... |
|:---:|:---:|:---:|
| 230 | 53.0 | 1.191 to 1.424 |
| 320 | 29.2 | 1.105 to 1.234 |
| 360 | 22.8 | 1.082 to 1.182 |
| 500 | 12.9 | 1.046 to 1.103 |

A preferred range is therefore if D/d is between 1.04 and 1.40. Note that large D/d values such as above 2.0 are less preferred as then the structured wire obtains a too large elongation at low load which is detrimental for the bow formation in the cutting. The saw bow shows a too large chord so that the end sections of the workpiece are already cut while the middle is still not cut through.

It helps the dragging of the abrasive particles if the surface of the wire is softer than the core of the wire. A softer surface can be obtained by treating the surface of the wire. For example by decarburizing the surface of the wire a softer type of steel forms at the surface as the surface contains less carbon. Practical examples of decarburization are given in US 5014760. Alternatively the wire can be coated with a coating that is softer than the steel wire core. Suitable coatings are an iron or low carbon steel coating, a copper or a zinc coating or a brass coating.

The shape of the structured sawing wire can best be measured by means of a KEYENCE LS 3034 laser scan system in combination with a KEYENCE LS 3100 processing unit such as described in WO 95/16816. In this system a structured sawing wire of about 20 cm length is held taut under a force of 1±0.2 N. Then a diode laser head scans the wire along its length (the Z-axis) and the under and upper edge of the wire is recorded as a function of length 'z'. The average of the two values gives the position of the center of the wire along the X-axis, perpendicular to the 'Z-axis' as a function of 'z' i.e. x(z). Then the fixation points are turned 90° and the scan is repeated. This results in the position of the center of the wire along the Y-axis as a function of the 'z' coordinate i.e. y(z). Hence the parameter function (x(z),y(z),z) defines the shape of the center of the wire in three dimensions. By loading into a spreadsheet program, one can visualize the trace in an enlarged view which is needed as the indentations are quite small. One can rotate it by applying a rotation transformation to it, and observe the projections from any desired angle.

According a second aspect of the invention a method to produce the sawing wire according to any one of the claims 1 to 9, having the features of claim 10, is described.

In its most general form the method comprises the steps of:

➢ Giving the wire linear axial movement by unwinding it from a pay-off spool;

➢ Giving the wire successive bends in one direction in a single plane;

➢ Winding said wire onto a take-up spool

Characteristic of the method is that said single plane rotates relative to and around the axis of said axially moving wire.

The bends the wire receives are successive i.e. one after the other. In combination with the axial movement of the wire, this results in bends that are spatially separated from one another. The distance between the bends, i.e. the segment length, will be dictated by the speed of the wire and the frequency of the indentation. The distance between the bends - and thus the length of the segments - can be varied by either changing indentation frequency or wire speed or both.

The bends are made in one direction, outwardly from the center of the wire. The bends occur in a single plane. An angle will thus form between the two segments adjacent to a bend. This degree of bending must be adjusted so as to meet the product requirements of the structured wire. Deeper bending will result in a higher circumscribed cylinder diameters 'D' and therefore a higher 'D/d' ratio.

The plane in which the bends are made rotates around the axis of the moving wire. More specifically: the rotation axis of the plane is the axis of the moving wire. The ratio of rotational speed to linear speed will determine the pitch length of the helix. In combination with the segment length this will determine the average number of bends per pitch length 'P'.

There are a number of ways in which the bends can be induced on the wire.

In a first embodiment of the method, the wire passes straight through a device wherein hammer pins are radially arranged (e.g. 6 hammer pins under an angle of 60° in between them). The hammer pins are fired in succession either in counterclock or clockwise direction. The hammer pins locally bend the wire while the plane of bending is formed by the activated hammer pin and the wire axis. As the hammer pins are fired in succession the bending plane rotates in between two bends with the angle between successive hammer pins (e.g. 60°). The length in between bends can be controlled by the timing of the firing sequence of the hammer pins. In this way random sequences can be implemented.

In a second embodiment, the bending is performed by linearly moving the wire through a device that applies bends in succession in one direction and in a single plane. The device is made to rotate around the axis of the wire while the axes of pay-off and take-up spools remain stationary.

Alternatively, the device can be held stationary and the axes of the pay-off and take-up spool can be made to rotate (at equal angular speed and direction) around the axis of the moving wire.

The combination of both rotating spools and a rotating device is of course also possible.

As a further alternative, the pay-off spool, the device and the take-up spool all remain stationary. Before entering the device, the wire is twisted up around its axis and is led through the device - where it receives indentations - and is subsequently untwisted. Due to the untwisting the bends are angularly distributed along the length of the wire.

The device can e.g. be a single hammer pin that repeatedly hammers on the wire thereby inducing a bend on the wire. The single hammer pin is made to rotate around the axis of the wire, or the single hammer pin can be made stationary while the wire is rotated under it, either by rotating the wire as a whole or by locally twisting up the wire, denting it and untwisting it again.

A most preferred implementation of the method is by using a toothed wheel. By pushing the wire against the wheel - e.g. by two small pulleys on either side of the toothed wheel - bends are induced on the wire. The segment distance can then be adapted by changing the tooth spacing or a repeating pattern of segment distances can be imposed on the wire.

**Brief Description of Figures in the Drawings**

Figure 1a is the projection in 3 directions of the centre of an unused prior-art structured sawing wire.
Figure 1b is the projection in 3 directions of the centre of a used prior-art structured sawing wire.
Figure 2 illustrates the geometry of the inventive structured sawing wire.
Figure 3a shows a first method to produce the inventive structured sawing wire.
Figure 3b shows a second method to produce the inventive structured sawing wire.
Figure 3c shows a third method to produce the inventive structured sawing wire.
Figure 4 shows the projection in 3 directions of the centre of an unused structured sawing wire according the invention.
Figure 5 shows the sawing performance on a single wire saw of a conventional structured wire.
Figure 6 shows the sawing performance on a single wire saw of two wires according the invention.

**Mode(s) for Carrying Out the Invention**

Figure 1a shows the shape of a prior-art structured sawing wire as described in WO 2006/067062. The wire is of circular shape and has a diameter of 0.25 mm. The wire was 3D - scanned as described in paragraph [0029] and the three graphs show the three projections of the centre of the wire in the YZ, YX and XZ planes. The wire has been rotated around the Z-axis so that the projections clearly show the waveforms in the two mutual perpendicular bending directions. The wave in the YZ-plane clearly shows a wavelength of about 3.0 mm, while the projection in the XZ-plane shows a longer wavelength of about 5.2 mm. The half amplitude of the wave is about 0.04 mm making the overall circumscribed diameter of the wire about 0.33 mm. This wire is referred to as 'Ref', the Reference wire in what follows.

Contrary to what Figure 3 of WO 2006/067062 shows, the projection of the so shaped wire in the XY-plane shows a kind of Lissajous-type figure (and not a cross-like shape). The underlying harmonic functions of the graph are not the usual cosine or sine functions, but are sawtooth functions with different amplitude and wavelengths. Note that approximately half of the scanned length is shown in the XY-plane of Figure 1 a as otherwise the graph becomes too cluttered.

When subjecting now the wire to a sawing operation, the shape of the wire drastically changes. Figure 1b shows the very same wire after use and scanned in the same way. No wave shape can be extracted anymore in the YZ-plane, while in the XZ-plane, a clear sawtooth shape remains visible. The waveshape has a peak-to-peak amplitude of about 0.02 to 0.04 mm with a wavelength of 3.1 mm. It appears as if one of the bending planes has been pushed out and the wire moves flat in the cut.

Figure 2 now describes the geometrical elements of the structured wire according the invention. 210, 210' and 210" indicate the cross sections of a single wire that makes a bend in 210'. The wire has a radius $R_0$ while the radius of the circumscribed cylinder has a radius of $R_m$. The distance $R_m-R_0$ indicates how far the centre of the wire has been pushed outwardly at the bends. 'δ' indicates the gap that forms between wire and the circumscribed cylinder in between which abrasive particles can get trapped. As seen from the centre of the structured wire, the wire spans an angle of '$2\pi/P$' between two successive bends wherein 'P' is the average number of bends per $2\pi$ radians i.e. per full pitch. The half-angle is '$\pi/P$' as indicated. Some simple geometry will show that the gap size '$\delta$' is according the aforementioned formula.

Figure 3 illustrates different ways by which the wire can be produced. Note that like parts are identically identified in Figure 3a through 3c. In a first preferred embodiment of Figure 3a, the wire 302 is unwound from a pay-off spool 310 in a pay-off direction 312. The wire is then linearly moved through a device 320 after which is taken up on a take-up spool 310'. Guiding pulleys 330, 330' ensure a straight feed through device 320. The device 320 provides successive bends in one direction in a single plane. In this first embodiment the device 320 is stationary while the axes of the spools 310, 310' rotate around the axis of the wire 350. By rotating the spools, successive bends are imposed on the wire under a changing angle as the single bending plane relatively rotates around the axis of the wire.

According a second preferred embodiment, shown in Figure 3b, the spool axes of spools 310 and 310' remain stationary, while the device 320 rotates (indicated by arrow 316). Care is taken that the axis of rotation of the single bending plane is as close as possible to the axis of the wire 350.

According a third preferred embodiment, shown in Figure 3c, the axes of the spools 310, 310' and the device 320 remain stationary. The wire 302 is guided over pulleys 330, 330'', through the stationary device 320 to pulleys 330''' and 330' to the take-up spool 310'. The wheel couples 330, 330''' and 330'', 330' rotate synchronously around the axis of the wire 350. As a result, the wire obtains a first twist when going over pulley 330, a second twist in the same direction at the turn at 330'' before entering the device 320. Hence, when the pulleys rotate at an angular speed $\omega$, the wire will rotate in the device 320 at angular speed $2\omega$. In this way a higher linear speed can be obtained compared to the first embodiment as less mass has to be rotated around (only the piece of wire between the pairs of pulleys) while the wire rotates at double speed at the device.

The device 320 can be implemented in a number of ways.

A first - not shown - way is to have 'N' different hammer pins radially arranged in a plane perpendicular to the linear movement direction of the wire. The hammer pins are e.g. electromagnetic or piezo-electrically actuated. The angle between the pins is (360°/N). The hammer pins are fired in sequence and a bend in one direction in a single plane is induced whenever a hammer fires. As the pins are fired in succession, the bending plane rotates around the wire (either in clockwise or counterclockwise direction). The axis of pay-off and take-up spools, the device and even the wire do not have to rotate.

If the frequency of firing successive pins is 'f' hertz, one full rotation is obtained after 'N/f' seconds. The average number of bends per pitch length is always N, irrespective of the linear speed of the wire. Hence N=3 is the most preferred number.

A second - not shown - way to implement the device 320 is to have a single hammer pin mounted on a rotating table. The table rotates with a period '$T_{rot}$'. The average number of bends per pitch length 'P' is then equal to the product of the period for rotating the bending plane '$T_{rot}$' with the frequency between successive firings of the pins 'f' : $P=T_{rot}f$. Hence if the wire rotates at 1000 rpm relative to the plane, the pins must be fired with a frequency between 42 to 60 Hz in order to obtain a 'P' value of between 2.5 and 3.5 bends per pitch.

A third alternative is to implement bends by a toothed gear wheel. This is the simplest way. By pushing the wire against the toothed wheel 322 by the push pulleys 324 and 324', successive bends are induced. As the distance between the teeth is fixed, say 's', the length of the segments will be 's'. As the pitch length is 'v.$T_{rot}$', wherein 'v' is the linear speed of the wire, the average number of bends per pitch length 'P' is equal to 'v.$T_{rot}$/s'. As before '$T_{rot}$' is the time it takes to relatively rotate the single plane once around the wire.

With the method as shown in figure 3c a structured sawing wire was made. A 0.25 mm brass plated high tensile wire with a tensile strength of 3170 N/mm$^2$ was led through a bunching machine. The buncher was set to induce one torsion per 14 mm (the 'lay length L'). On the cradle a toothed wheel was mounted with an outer circumference of 8 mm and with 6 teeth. The teeth were rounded to a curvature of about 2 mm. The distance between bends is then 4.9 mm which give a 'P' value of 2.86. The bending angle induced at the corner of a polygon is 120°. This sample is referred to as 'Inv 1'. This sample showed a 'D/d' value of 2.2 which was not in the preferred range.

By using a larger toothed wheel of 12 mm diameter with 9 teeth with a rounding of 4 mm, the circumscribed diameter of the wire 'D' could be reduced. Again the distance between the teeth is 4.9 mm. Due to the fact that the bending angle at the corner of the polygon is lower now: 140°, the circumscribed diameters 'D' is lower. This wire is referred to as 'Inv 2'.

Figure 4 shows the trace of this structured sawing wire 'Inv 2' in the three projection planes. In the XY-plane only the part indicated thick in the YZ and XZ planes is shown, in order not to blur the figure too much. The peak-to-peak amplitude is about 0.1 mm which results in a D/d value of (0.25+0.1)/0.25 or 1.4. Hence, the wire is particularly suitable to be used with grit sizes of F230 with a median size of 53 $\mu$m. The pitch length that can be derived from the graph is 13.6 mm and there are 16 bends discernable over a length of 5 pitches i.e. P is 3.2. This corresponds with what can be found on the XY plane projection: the wire takes a roughly triangular shape. The calculated gap size $\delta$ is 22 $\mu$m hence about 0.42 times the optimum grain size.

Samples 'Inv 1' and 'Inv 2' illustrate that the magnitude of the circumscribed wire 'D' can be controlled through the number of teeth on the toothed wheel. An increased number of teeth - with the same distance between the teeth - will lead to a lower bending a the teeth and a reduced circumscribed diameter 'D'.

The Reference wire 'Ref' and the two inventive wires 'Inv 1' and 'Inv 2' were tested on a single wire saw (model DWT RTS-480) in a reciprocating mode (180 m of wire going back and forth) with a wire speed of 10 m/s at a tension 27 N. The wire was lowered through a mono-crystalline silicon block of size $125\times125$ mm$^2$ at a speed of 2.5 mm/min. A mixture of PEG with F500D silicon carbide in a 1:1 weigh ratio was used as cutting slurry. The median particle size is 12.8 $\mu$m. The bow formed at the cut was used a measure for the cutting efficiency of the wire.

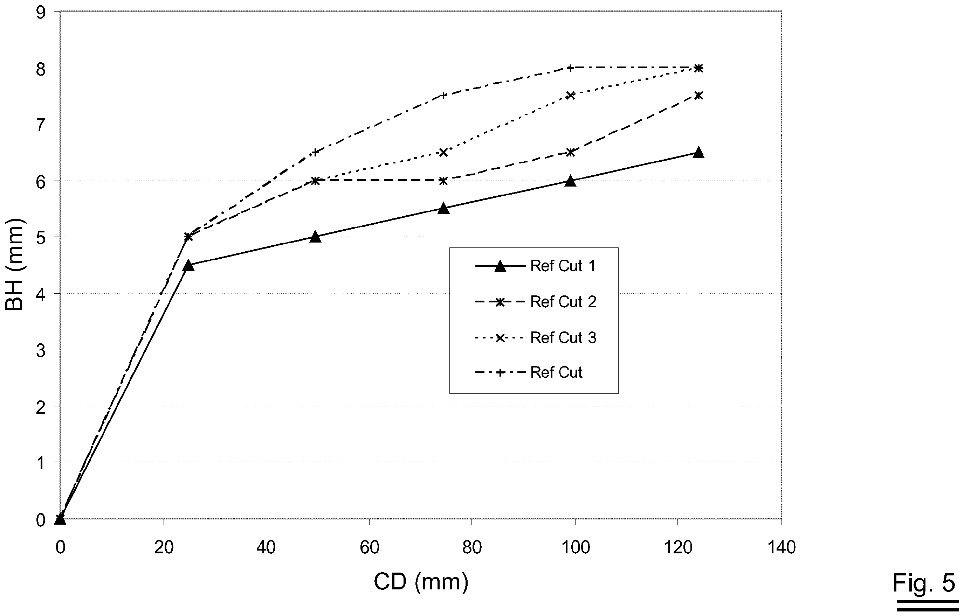

Figure 5 shows the performance of the Reference wire 'Ref' after 1, 2, 3 and 4 different cuts with the same wire. The Bow Height ('BH') in mm is shown a function of the Cutting Dept ('CD') in mm. The wire shows an increased bow after repeated use, which can be attributed to the flattening of the wire. A non-structured (i.e. straight, not deformed, not shown) wire of 250 $\mu$m showed a bow at the end of the cut of 12 mm.

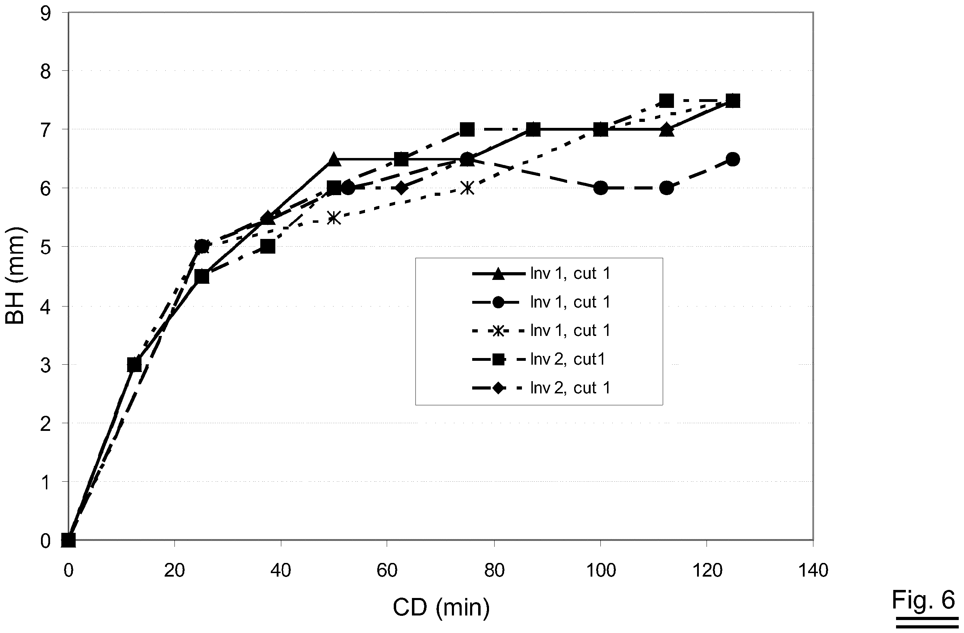

Figure 6 shows the performance of the inventive wires 'Inv 1' and 'Inv 2'. The performance is similar to that of the Reference wire.

The roughness of the resulting wafers was measured at entry side, in the middle of the wafer and at the exit side and gave following results (R$_a$ values in $\mu$m, Table II):

Table II

| Wire | Left | Middle | Right |
|---|---|---|---|
| Ref, first cut | 1.43 | 1.41 | 1.43 |
| Ref, first cut | 1.28 | 1.10 | 1.12 |
| Inv 1, first cut | 1.83 | 1.81 | 1.65 |
| Inv 1, first cut | 2.46 | 1.60 | 1.71 |
| Inv 1, first cut | 1.86 | 1.66 | 1.58 |
| Inv 2, first cut | 1.53 | 1.15 | 1.31 |
| Inv 2, first cut | 1.53 | 1.13 | 1.50 |

The results illustrate that a too high 'D/d' ratio (Inv 1 wire) leads to an increased roughness of the wafer surface.

Due to the circular symmetry of the wire, no flattening of the wire was observed after use.

**Claims**

1. A sawing wire, suitable for sawing with abrasive particles having a median size of between 3 and 50 micrometer, said sawing wire being a steel wire having a substantially helicoidal shape comprising segments with bends in between, said bends being outwardly radial to said helicoidal shape
**characterised in that**
between said bends, gaps are present between said steel wire and a cylinder circumscribing said sawing wire, said gaps having a maximum gapsize being 0.25 to 2 times the median size of said abrasive particles.

2. The sawing wire according to claim 1 wherein said helicoidal shape further has a pitch length, said helicoidal shape having more than two bends per pitch length.

3. The sawing wire according to any one of claim 1 or 2 wherein said steel wire has a wire diameter, said circumscribed cylinder has a cylinder diameter, further **characterized in that** the difference of said cylinder diameter and said wire diameter is from 0.7 to 11 times the median size of said abrasive particles.

4. The sawing wire of claim 3 wherein the ratio of said cylinder diameter over said wire diameter is between 1.04 and 1.4.

5. The sawing wire according to any one of claims 1 to 3 wherein said segments are different in length within a repeating pattern.

6. The sawing wire according to any one of claims 1 to 3 wherein said segments have equal lengths.

7. The sawing wire according to any one of claims 1 to 6 wherein said median size of said abrasive particles is about 30 micrometer.

8. The sawing wire of any of the above claims said steel wire further having a surface, said surface being softer than the core of said steel wire for improved abrasive particle retention.

9. The sawing wire of claim 8 wherein said surface is a coating out of the group comprising: low carbon steel, iron, copper, zinc, brass.

10. A method to produce the sawing wire according any one of the claims 1 to 9 comprising the steps of:

    - Giving the steel wire linear axial movement by unwinding it from a pay-off spool,
    - Giving the steel wire successive bends in one direction in a single plane,
    - Winding said steel wire onto a take-up spool

    **characterised in that**
    said single plane rotates relative to and around the axis of said axially moving steel wire.

11. The method according claim 10 wherein said successive bends in one direction in a single plane are imposed onto said steel wire by guiding said steel wire over a toothed wheel, said toothed wheel having its axis perpendicular to said single plane.

12. The method according to claim 10 or 11 wherein the axes of said take-up and pay-off spools equally rotate around the axis of said axially moving steel wire while said single plane remains stationary.

13. The method according to claim 10 or 11 wherein said single plane rotates around the axis of said axially moving steel wire while the axes of said take-up and pay-off spools remains stationary.

14. The method according to claim 10 or 11 wherein said single plane, the axes of said pay-off and take-up spool remain stationary and wherein said steel wire is twisted up before imposing said successive bends in one direction in a single plane and is untwisted thereafter so as to make the steel wire rotate relative to said single plane.

**Patentansprüche**

1. Sägedraht, der geeignet ist zum Sägen mit Abriebpartikeln, die eine mittlere Größe zwischen 3 und 50 $\mu$m aufweisen, wobei der Sägedraht ein Stahldraht ist, der im Wesentlichen eine Schraubenform aufweist und Segmente mit dazwischenliegenden Biegungen umfasst, wobei die Biegungen radial nach außen in Bezug auf die Schraubenform sind, **dadurch gekennzeichnet, dass**, zwischen den Biegungen Lücken zwischen dem Stahldraht und einem Zylinder vorhanden sind, der den Sägedraht umgibt, wobei die Lücken eine maximale Lückengröße von 0,25 bis 2 mal der mittleren Größe der Abriebpartikel aufweisen.

2. Sägedraht nach Anspruch 1, wobei die Schraubenform außerdem eine Schrittweite aufweist, wobei die Schraubenform mehr als zwei Biegungen pro Schrittweite aufweist.

3. Sägedraht nach einem der Ansprüche 1 oder 2, wobei der Stahldraht einen Drahtdurchmesser aufweist, wobei der umgebende Zylinder einen Zylinderdurchmesser aufweist, außerdem **dadurch gekennzeichnet, dass** die Differenz zwischen dem Zylinderdurchmesser und dem Drahtdurchmesser von 0,7 bis 11 mal der mittleren Größe der Abriebpartikel entspricht.

4. Sägedraht nach Anspruch 3, wobei das Verhältnis des Zylinderdurchmessers zu dem Drahtdurchmesser zwischen 1,04 und 1,4 liegt.

5. Sägedraht nach einem der Ansprüche 1 bis 3, wobei die Segmente in einem sich wiederholenden Muster eine unterschiedliche Länge aufweisen.

6. Sägedraht nach einem der Ansprüche 1 bis 3, wobei die Segmente jeweils die gleiche Länge aufweisen.

7. Sägedraht nach einem der Ansprüche 1 bis 6, wobei die mittlere Größe der Abriebpartikeln ungefähr 30 $\mu$m beträgt.

8. Sägedraht nach einem der vorangehenden Ansprüche, wobei der Stahldraht außerdem eine Oberfläche aufweist, wobei die Oberfläche für ein verbessertes Zurückhalten der Abriebpartikel weicher als der Kern des Stahldrahts ist.

9. Sägedraht nach Anspruch 8, wobei die Oberfläche eine Beschichtung aus der Gruppe ist, die besteht aus: Kohlenstoffstahl, Eisen, Kupfer, Zink, Messing.

10. Verfahren zu Herstellen eines Sägedrahts nach einem der Ansprüche 1 bis 9, das die folgenden Schritte umfasst:

 - Versehen des Stahldrahts mit einer linearen axialen Bewegung, indem er von einer Ablaufspule abgewickelt wird,
 - Versehen des Stahldrahts mit aufeinanderfolgenden Biegungen in einer Richtung in einer einzigen Ebene,
 - Wickeln des Stahldrahts auf eine Aufrollspule, **dadurch gekennzeichnet, dass**,

 die einzige Ebene sich relativ zu und um eine Achse des axial sich bewegenden Stahldrahts dreht.

11. Verfahren nach Anspruch 10, wobei die aufeinanderfolgenden Biegungen in einer Richtung in einer einzigen Ebene dem Stahldraht aufgezwungen werden, indem der Stahldraht über ein gezahntes Rad geführt wird, wobei das gezahnte Rad seine Achse senkrecht zu der einzigen Ebene aufweist.

12. Verfahren nach Anspruch 10 oder 11, wobei die Achsen der Aufroll- und der Abrollspule sich gleichförmig um die Achse des sich axial bewegenden Stahldrahts drehen, während die einzige Ebene stationär bleibt.

13. Verfahren nach Anspruch 10 oder 11, wobei die einzige Ebene sich um die Achse des sich axial bewegenden Stahldrahts dreht, während die Achsen der Aufroll- und der Abrollspule stationär bleiben.

**14.** Verfahren nach Anspruch 10 oder 11, wobei die einzige Ebene und die Achsen der Aufroll- und der Abrollspule stationär bleiben, wobei der Stahldraht verdrillt wird, bevor ihm die aufeinanderfolgenden Biegungen in einer Richtung in einer einzigen Ebene aufgezwungen werden, und danach entdrillt wird, sodass der Stahldraht veranlasst wird, sich relativ um die einzige Ebene zu drehen.

**Revendications**

**1.** Fil de sciage, approprié pour scier avec des particules abrasives présentant une taille médiane compris entre 3 et 50 micromètres, ledit fil de sciage étant un fil d'acier présentant une forme sensiblement hélicoïdale comprenant des segments avec des coudes entre ceux-ci, lesdits coudes étant radiaux vers l'extérieur par rapport à ladite forme hélicoïdale, **caractérisé en ce que**, entre lesdits coudes, des espaces sont présents entre ledit fil d'acier et un cylindre qui entoure ledit fil de sciage, lesdits espaces présentant une taille d'espace maximum correspondant à 0,25 à 2 fois la taille médiane desdites particules abrasives.

**2.** Fil de sciage selon la revendication 1, dans lequel ladite forme hélicoïdale présente en outre une longueur de pas, ladite forme hélicoïdale présentant plus de deux coudes par longueur de pas.

**3.** Fil de sciage selon l'une quelconque des revendications 1 ou 2, dans lequel ledit fil d'acier présente un diamètre de fil, ledit cylindre entourant présente un diamètre de cylindre, **caractérisé en outre en ce que** la différence entre ledit diamètre de cylindre et ledit diamètre de fil correspond à 0,7 à 11 fois la taille médiane desdites particules abrasives.

**4.** Fil de sciage de la revendication 3, dans lequel le rapport entre ledit diamètre de cylindre et ledit diamètre de fil est compris entre 1,04 et 1,4.

**5.** Fil de sciage selon l'une quelconque des revendications 1 à 3, dans lequel lesdits segments présentent une longueur différente à l'intérieur d'un motif à répétition.

**6.** Fil de sciage selon l'une quelconque des revendications 1 à 3, dans lequel lesdits segments présentent des longueurs égales.

**7.** Fil de sciage selon l'une quelconque des revendications 1 à 6, dans lequel ladite taille médiane desdites particules abrasives est d'environ 30 micromètres.

**8.** Fil de sciage selon l'une quelconque des revendications précédentes, dans lequel ledit fil d'acier présente en outre une surface, ladite surface étant plus tendre que le noyau dudit fil d'acier en vue d'une rétention améliorée des particules abrasives.

**9.** Fil de sciage de la revendication 8, dans lequel ladite surface est un revêtement choisi parmi le groupe comprenant de l'acier à faible teneur en carbone, du fer, du cuivre, du zinc et du laiton.

**10.** Procédé pour produire le fil de sciage selon l'une quelconque des revendications 1 à 9, comprenant les étapes suivantes:

- imprimer au fil d'acier un déplacement axial linéaire en le déroulant à partir d'une bobine débitrice,
- appliquer au fil d'acier des coudes successif dans une direction dans un plan unique, et
- enrouler ledit fil d'acier sur une bobine réceptrice,

**caractérisé en ce que** ledit plan unique tourne par rapport à et autour de l'axe dudit fil d'acier se déplaçant axialement.

**11.** Procédé selon la revendication 10, dans lequel lesdits coudes successifs dans une direction dans un plan unique sont imposés sur ledit fil d'acier en guidant ledit fil d'acier sur une roue dentée, ladite roue dentée ayant son axe perpendiculaire audit plan unique.

**12.** Procédé selon la revendication 10 ou 11, dans lequel les axes desdites bobines débitrice et réceptrice tournent également autour de l'axe dudit fil d'acier se déplaçant axialement pendant que ledit plan unique reste stationnaire.

**13.** Procédé selon la revendication 10 ou 11, dans lequel ledit plan unique tourne autour de l'axe dudit fil d'acier se déplaçant axialement pendant que les axes desdites bobines débitrice et réceptrice restent stationnaires.

**14.** Procédé selon la revendication 10 ou 11, dans lequel ledit plan unique, les axes desdites bobines débitrice et réceptrice restent stationnaires, et dans lequel ledit fil d'acier est torsadé avant d'imposer lesdits coudes successifs dans une direction dans un plan unique et est détorsadé ensuite de telle sorte que le fil d'acier tourne par rapport audit plan unique.

Prior Art
Fig. 1a

EP 2 643 118 B1

Prior Art

Fig. 1b

Fig. 2

Fig. 3a

Fig. 3b

Fig. 3c

Fig. 4

Fig. 5

Legend:
- Ref Cut 1
- Ref Cut 2
- Ref Cut 3
- Ref Cut

X-axis: CD (mm) — 0, 20, 40, 60, 80, 100, 120, 140

Y-axis: BH (mm) — 0, 1, 2, 3, 4, 5, 6, 7, 8, 9

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004276207 A
- GB 717874 A
- GB 771622 A
- GB 1397676 A
- CH 692489
- JP 2007196312 A
- WO 9012670 A
- JP 2007044841 A

- KR 2001002689
- US 2860862 A
- FR 750081
- JP 4057666 B
- WO 2006067062 A
- US 5014760 A
- WO 9516816 A